# EUROPEAN PATENT APPLICATION

(11) **EP 2 371 872 A1**
(43) Date of publication of application: **05.10.2011**
(21) Application number: 09834262.9
(22) Date of filing: 09.10.2009
(51) Int. Cl.: C08F 290/06, B05D 7/24, C08G 77/58, C09D 4/02, C09D 183/04, C09D 185/00

(54) **ACTIVE ENERGY RAY-CURABLE COMPOSITION, ACTIVE ENERGY RAY-CURABLE COATING MATERIAL, AND MOLDED PRODUCT**

(30) Priority: 26.12.2008 JP 2008333718; 26.03.2009 JP 2009075710
(71) Applicant: Sekisui Chemical Co., Ltd., Osaka 530-8565 (JP)
(72) Inventor: UCHIDA, Kazuho, Mishima-gun Osaka 618-0021 (JP); ANDO, Tsutomu, Mishima-gun Osaka 618-0021 (JP); NAKAJIMA, Daisuke, Mishima-gun Osaka 618-0021 (JP)
(74) Representative: TER MEER - STEINMEISTER & PARTNER GbR
(86) International application number: PCT/JP2009/005271
(87) International publication number: WO 2010/073445

(57) **Abstract**

The present invention provides an active energy ray-curable composition that provides a cued product with excellent abrasion resistance and facilitates formation of a molded product having a high-hardness surface layer formed thereon. The active energy ray-curable composition contains: an inorganic polymer obtainable by hydrolytic condensation of inorganic polymer components including a silane compound; a water-soluble polyfunctional (meth)acrylate; and an active energy ray polymerization initiator. The silane compound is represented by the formula (1): Si(R1)ₚ(OR2)₄₋ₚ in which R1 represents a C₁₋₃₀ organic group containing a polymerizable double bond; R2 represents a C₁₋₆ alkyl group; p is 1 or 2; when p is 2, the R1s may be the same as or different from one another; and the R2s may be the same as or different from one another.

## Description

### TECHNICAL FIELD

The present invention relates to an active energy ray-curable composition that can be used as a surface layer formation material to form a surface layer, for example, on the surface of a molded product, and also relates to an active energy ray-curable coating material and a molded product.

### BACKGROUND ART

Poly(meth)acrylate resins and polycarbonate resins are excellent in moldability and processability. Resin molded products made of a poly(meth)acrylate resin or a polycarbonate resin are widely used for applications such as glasses, contact lens, and lens for optical devices since these resin molded products are lighter than glass. In particular, resin molded products made of a polycarbonate resin are suitably used in the form of a large-size resin molded product since these resin molded products are excellent in impact resistance. For example, resin molded products made of a polycarbonate resin are in practical use as head lamp lens for vehicles, hoods for motorbikes, and window materials for vehicles, trains, bullet trains and the like.

These resin molded products, however, have lower surface hardness than that of glass. Therefore, these resin molded products tend to have abrasion (or scratch) during transportation or attachment of components, or in use. In addition, the durability of these resin molded products is low.

Consequently, there is a need to enhance the surface hardness of these resin molded products. In order to enhance the hardness, a surface layer with higher hardness has been conventionally formed on the surface of these resin molded products.

One example of the material for forming the surface layer is a composition for forming a surface layer disclosed in Patent Document 1, which contains a polyfunctional acrylate monomer, colloidal silica, an acryloxy functional silane, and a photopolymerization initiator. In Examples of Patent Document 1, 3-methacryloxypropyltrimethoxysilane is used as the acryloxy functional silane.

Patent Document 2 discloses a composition for forming a surface layer, which contains an ultraviolet curing resin and a siloxane compound as a surface modifier. Patent Document 2 specifically teaches, as examples of the ultraviolet curing resin, acrylic oligomers containing at least two acryloyl groups in the molecule, and acrylic monomers or oligomers with colloidal silica linked thereto, and specifically teaches, as examples of the siloxane compound, polyether-modified dimethylpolysiloxane copolymers, polyether-modified methyl alkyl polysiloxane copolymers, and polyester-modified dimethylpolysiloxane.

Patent Document 3 discloses a coated resin molded product produced by forming a primer layer on the surface of a resin molded product, and then forming a top coat layer on the surface of the primer layer. As a material for forming the primer layer, a thermoplastic acrylic polymer is used. As a material for forming the top coat layer, a colloidal silica filled organopolysiloxane is used.

Patent Document 1: JP 57-131214 A
Patent Document 2: JP 2003-338089 A
Patent Document 3: JP 04-002614 B

### SUMMARY OF THE INVENTION

### PROBLEMS TO BE SOLVED BY THE INVENTION

In the case that the composition for forming a surface layer of Patent Document 1 or 2 is used to form a surface layer on the surface of the resin molded products, the resulting surface layer may not have sufficient hardness.

In Patent Document 3, in order to enhance the hardness of the surface, the top coat layer is formed after formation of the primer layer. Therefore, the production efficiency of the resin molded product coated with the surface layer is low. In addition, even when the material for forming a primer layer and the material for forming a top coat layer are used to form a surface layer, the hardness of the resulting surface layer may not be sufficiently enhanced. Furthermore, the material for forming a top coat layer problematically requires a longer curing time.

An object of the present invention is to provide an active energy ray-curable composition that provides a cured product having excellent abrasion resistance and facilitates formation of a molded product having a high-hardness surface layer formed thereon, an active energy ray-curable coating material and a molded product.

### MEANS FOR SOLVING THE PROBLEMS

A wider aspect of the present invention provides an active energy ray-curable composition containing an inorganic polymer obtainable by hydrolytic condensation of inorganic polymer components including a silane compound represented by the following formula (1); a water-soluble polyfunctional (meth)acrylate; and an active energy ray polymerization initiator.

Si(R1)ₚ(OR2)₄₋ₚ (1)

In the formula (1), R1 represents a C₁₋₃₀ organic group containing a polymerizable double bond; R2 represents a C₁₋₆ alkyl group; and p is 1 or 2. When p is 2, the R1s may be the same as or different from one another. The R2s may be the same as or different from one another.

In a specific aspect of the active energy ray-curable composition of the present invention, the inorganic polymer components further include a metal alkoxide compound represented by the following formula (2).

M(R3)ₙ(OR4)₄₋ₙ (2)

In the formula (2), M represents Si, Ti, or Zr; R3 represents a phenyl group, a C₁₋₃₀ alkyl group, or a C₁₋₃₀ hydrocarbon group containing an epoxy group; R4 represents a C₁₋₆ alkyl group; and n is an integer of 0 to 2. When n is 2, the R3s may be the same as or different from one another. The R4s may be the same as or different from one another.

In another specific aspect of the present invention, the compound represented by the formula (2) is a silane compound represented by the following formula (21).

Si(R13)ₘ(OR14)₄₋ₘ (21)

In the formula (21), R13 represents a phenyl group, a C₁₋₃₀ alkyl group, or a C₁₋₃₀ hydrocarbon group containing an epoxy group; R14 represents a C₁₋₆ alkyl group; and m is an integer of 0 to 2. When m is 2, the R13s may be the same as or different from one another. The R14s may be the same as or different from one another.

In still another specific aspect of the present invention, the inorganic polymer components include, as the compound represented by the formula (2), a compound represented by the following formula (2A).

M(OR4a)₄ (2A)

In the formula (2A), R4as each represent a C₁₋₆ alkyl group and may be the same as or different from one another.

In still another specific aspect of the present invention, the inorganic polymer components include, as the compound represented by the formula (21), a compound represented by the following formula (21A).

Si(OR14a)₄ (21A)

In the formula (21A), R14as each represent a C₁₋₆ alkyl group and may be the same as or different from one another.

In still another specific aspect of the present invention, the water-soluble polyfunctional (meth) acrylate is an oxyalkylene-modified glycerin (meth)acrylate represented by the following formula (3) or an alkylene glycol di(meth)acrylate represented by the following formula (4).

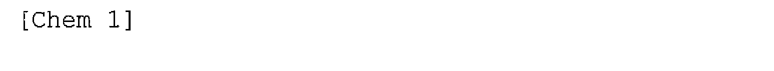

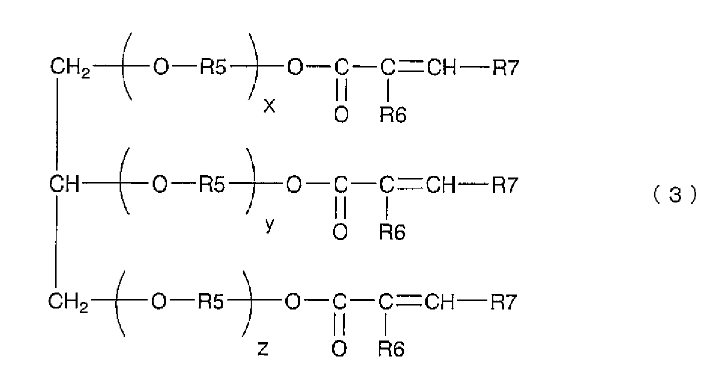

In the formula (3), R5 represents an ethylene group or a propylene group; R6 represents a hydrogen or a methyl group; R7 represents a hydrogen or a methyl group; and the sum of x, y and z is an integer of 6 to 30. The R5s, the R6s and the R7s may be same as or different from one another.

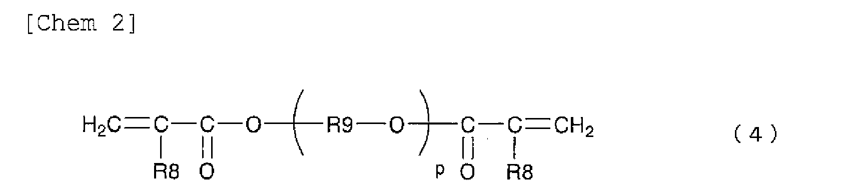

In the formula (4), R8 represents a hydrogen or a methyl group; R9 represents an ethylene group or a propylene group; and p is an integer of 1 to 25.

The active energy ray-curable composition of the present invention is preferably used as a coating material. The active energy ray-curable composition of the present invention is suitably used as an active energy ray-curable coating material.

A molded product of the present invention has a surface layer formed from the active energy ray-curable coating material prepared according to the present invention.

### EFFECTS OF THE INVENTION

According to the present invention, it is possible to enhance the abrasion resistance of cured products obtained by curing the active energy ray-curable composition since the composition contains the inorganic polymer obtainable by hydrolytic condensation of inorganic polymer components including a compound represented by the formula (1), a water-soluble polyfunctional (meth)acrylate, and an active energy ray polymerization initiator.

In the case that the inorganic polymer components further include a compound represented by the formula (2), the abrasion resistance of cured products obtained by curing the active energy ray-curable composition can be further enhanced.

The use of the active energy ray-curable composition of the present invention facilitates formation of a molded product having a high-hardness surface layer formed thereon.

### BRIEF DESCRIPTION OF THE DRAWINGS

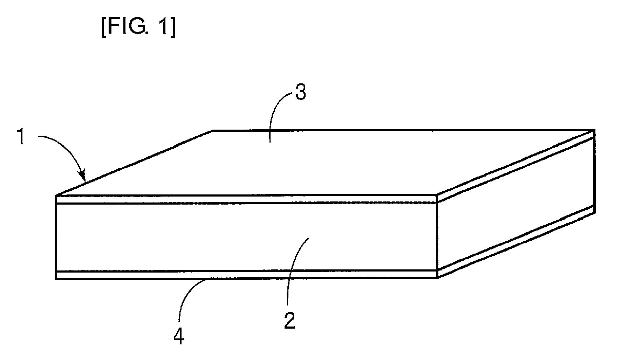

Fig. 1 is a perspective view illustrating a molded product according to one embodiment of the present invention.

### MODE FOR CARRYING OUT THE INVENTION

Hereinafter, the present invention is described in more detail.

The active energy ray-curable composition of the present invention contains an inorganic polymer obtainable by hydrolytic condensation of inorganic polymer components; a water-soluble polyfunctional (meth)acrylate; and an active energy ray polymerization initiator.

The term "inorganic polymer components" used herein is intended to indicate components used for production of the inorganic polymer and partially constituting the backbone of the produced inorganic polymer.

### (Inorganic polymer)

The inorganic polymer contained in the active energy ray-curable composition of the present invention is an inorganic polymer obtainable by hydrolytic condensation of inorganic polymer components including a silane compound represented by the following formula (1).

Si(R1)ₚ(OR2)₄₋ₚ (1)

In the formula (1), R1 represents a C₁₋₃₀ organic group containing a polymerizable double bond; R2 represents a C₁₋₆ alkyl group; and p is 1 or 2. When p is 2, the R1s may be the same as or different from one another. The R2s may be the same as or different from one another.

In order to further enhance the abrasion resistance of cured products, it is preferable that the inorganic polymer components further include a metal alkoxide compound represented by the following formula (2). Preferably, the inorganic polymer contained in the active energy ray-curable composition of the present invention is an inorganic polymer obtainable by hydrolytic condensation of the inorganic polymer components including a compound represented by the formula (1) and a compound represented by the following formula (2).

M(R3)ₙ(OR4)₄₋ₙ (2)

In the formula (2), M represents Si, Ti, or Zr; R3 represents a phenyl group, a C₁₋₃₀ alkyl group, or a C₁₋₃₀ hydrocarbon group containing an epoxy group; R4 represents a C₁₋₆ alkyl group; and n is an integer of 0 to 2. When n is 2, the R3s may be the same as or different from one another. The R4s may be the same as or different from one another.

In the case that R3 in the formula (2) is a C₁₋₃₀ alkyl group, specific examples of R3 include methyl group, ethyl group, propyl group, isopropyl group, isobutyl group, n-hexyl group, cyclohexyl group, n-octyl group, and n-decyl group. The maximum number of carbon atoms in the alkyl group is preferably 10 and is more preferably 6. The term "alkyl group" used herein is intended to include cycloalkyl groups.

In the case that R3 in the formula (2) is a C₁₋₃₀ hydrocarbon group containing an epoxy group, specific examples of R3 include 1,2-epoxyethyl group, 1,2-epoxypropyl group, 2,3-epoxypropyl group, 3,4-epoxybutyl group, 3-glycidoxypropyl group, and 2-(3,4-epoxycyclohexyl)ethyl group. The maximum number of carbon atoms in the hydrocarbon group is preferably 8 and is more preferably 6. The hydrocarbon group of a "C₁₋₃₀ hydrocarbon group containing an epoxy group" used herein is a group containing an oxygen atom derived from the epoxy group in addition to carbon atoms and hydrogen atoms.

Specific examples of R4 in the formula (2) include methyl group, ethyl group, n-propyl group, isopropyl group, n-butyl group, and isobutyl group.

M in the formula (2) is Si, Ti, or Zr. Preferably, M is Si. In other words, the compound represented by the formula (2) is preferably a silane compound represented by the following formula (21).

Si(R13)ₘ(OR14)₄₋ₘ (21)

In the formula (21), R13 represents a phenyl group, a C₁₋₃₀ alkyl group, or a C₁₋₃₀ hydrocarbon group containing an epoxy group; R14 represents a C₁₋₆ alkyl group; and m is an integer of 0 to 2. When m is 2, the R13s may be the same as or different from one another. The R14s may be the same as or different from one another.

Examples of R13 in the formula (21) include the same groups as those listed above for R3. In the case that R13 in the formula (21) is a C₁₋₃₀ alkyl group, the maximum number of carbon atoms in the alkyl group is preferably 10 and is more preferably 6. In the case that R13 in the formula (21) is a C₁₋₃₀ hydrocarbon group containing an epoxy group, the maximum number of carbon atoms in the hydrocarbon group is preferably 8 and is more preferably 6.

Examples of R14 in the formula (21) include the same groups as those listed above for R4.

Specific examples of the silane compound represented by the formula (21) include tetramethoxysilane, tetraethoxysilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, and diisopropyldimethoxysilane.

In the case that M in the formula (2) is Ti, specific examples of the compound represented by the formula (2) include titanium tetramethoxide, titanium tetraethoxide, titanium tetraisopropoxide, and titanium tetrabutoxide.

In the case that M in the formula (2) is Zr, specific examples of the compound represented by the formula (2) include zirconium tetramethoxide, zirconium tetraethoxide, zirconium tetraisopropoxide, and zirconium tetrabutoxide.

Examples of the polymerizable double bond in R1 in the formula (1) include carbon-carbon double bond.

Specific examples of R1 in the formula (1) include vinyl group, allyl group, isopropenyl group, and 3-(meth)acryloxyalkyl groups. Examples of the (meth) acryloxyalkyl groups include (meth) acryloxymethyl group, (meth)acryloxyethyl group, and (meth)acryloxypropyl group. In particular, R1 is preferably a (meth)acryloxyalkyl group. The minimum number of carbon atoms in R1 is preferably 2, and the maximum number of carbon atoms in R1 is preferably 30 and is more preferably 10.

The term "(meth)acryloxy" used herein means methacryloxy or acryloxy.

Specific examples of R2 in the formula (1) include methyl group, ethyl group, n-propyl group, isopropyl group, n-butyl group, and isobutyl group.

Specific examples of the silane compound represented by the formula (1) include 3-(meth)acryloxypropyltrimethoxysilane, 3-(meth)acryloxypropyltriethoxysilane, and 3-(meth)acryloxypropylmethyldimethoxysilane.

Any of these metal alkoxide compounds represented by the formula (2) and these silane compounds represented by the formula (21) may be used alone, or two or more of these may be used in combination. Any of these silane compounds represented by the formula (1) may be used alone, or two or more of these may be used in combination.

In the case that the inorganic polymer components include the compound represented by the formula (2) or the formula (21), the amount of the compound represented by the formula (2) or the formula (21) is more preferably in the range of 5 to 95% by weight to 100% by weight of the inorganic polymer components. The lower limit of the amount of the compound represented by the formula (2) or the formula (21) to 100% by weight of the inorganic polymer components is more preferably 10% by weight, and the upper limit thereof is more preferably 90% by weight. When the amount of the compound represented by the formula (2) or the formula (21) is too little, cured products obtained by curing the active energy ray-curable composition may crack. When the amount of the compound represented by the formula (2) or the formula (21) is too much, cured products obtained by curing the active energy ray-curable composition are soft and therefore tend to have low abrasion resistance.

The amount of the silane compound represented by the formula (1) is preferably in the range of 100 to 5% by weight, and is more preferably in the range of 95 to 5% by weight to 100% by weight of the inorganic polymer components. The upper limit of the amount of the silane compound represented by the formula (1) to 100% by weight of the inorganic polymer components is more preferably 90% by weight, and the lower limit thereof is more preferably 10% by weight. When the amount of the compound represented by the formula (1) is too little, cured products obtained by curing the active energy ray-curable composition are soft and therefore tend to have low abrasion resistance. When the amount of the compound represented by the formula (1) is too much, cured products obtained by curing the active energy ray-curable composition may crack.

The inorganic polymer components may include, as the compound represented by the formula (2), a compound represented by the following formula (2A), which is a compound represented by the formula (2) in which n is 0. The compound represented by the formula (2) may be a compound represented by the following formula (2A), which is a compound represented by the formula (2) in which n is 0. Alternatively, the inorganic polymer components may include, as the compound represented by the formula (2), a silane compound represented by the following formula (21A), which is a silane compound represented by the formula (21) in which m is 0. The compound represented by the formula (2) may be a silane compound represented by the following formula (21A), which is a silane compound represented by the formula (21) in which m is 0. The use of these compounds or silane compounds can further enhance the abrasion resistance of cured products of the active energy ray-curable composition.

M(OR4a)4 (2A)

In the formula (2A), R4as each represent a C₁₋₆ alkyl group and may be the same as or different from one another.

Si(OR14a)₄ (21A)

In the formula (21A), R14as each represent a C₁₋₆ alkyl group and may be the same as or different from one another.

The inorganic polymer components may include compounds other than the compound represented by the formula (2) and the silane compound represented by the formula (1). The other compounds may be copolymerized or graft polymerized with the compound represented by the formula (2) and the silane compound represented by the formula (1), provided that they do not deteriorate the transparency and abrasion resistance of cured products of the active energy ray-curable composition.

The inorganic polymer can be obtained by adding a solvent or water, and a catalyst and the like to the inorganic polymer components; hydrolytically condensing the inorganic polymer components by a sol-gel method; and removing, from the reaction solution, the solvent, water, and alcohols and the like which have been generated by the condensation.

The solvent is not particularly limited, provided that it is capable of dissolving the compound represented by the formula (2) and the silane compound represented by the formula (1). Specific examples of the solvent include alcoholic solvents such as methanol, ethanol, n-propanol, and isopropanol; ether solvents such as tetrahydrofuran, 1,4-dioxane, 1,3-dioxane, and diethylether; hydrocarbon solvents such as benzene, toluene, and n-hexane; keton solvents such as acetone, methyl ethyl ketone, and cyclohexanone; and ester solvents such as ethyl acetate and butyl acetate. Any of these solvents may be used alone, or two or more of these may be used in combination. In particular, low-boiling-point solvents are preferable because they can be easily volatilized. Preferred examples of the low-boiling-point solvents include alcoholic solvents such as methanol, ethanol, n-propanol, and isopropanol.

Water is used in the hydrolysis reaction to convert the alkoxy groups of the compound represented by the formula (2) and the silane compound represented by the formula (1) into hydroxyl groups. The amount of water used in the hydrolysis reaction is preferably 0.1 to 1 molar equivalents of the alkoxy groups. When the amount of water used in the hydrolysis reaction is too little, the hydrolysis reaction and the condensation reaction do not sufficiently proceed and thereby the inorganic polymer may not be produced. When the amount of water used in the hydrolysis reaction is too much, the inorganic polymer may turn into a gel. Therefore, the reaction time and temperature should be controlled to the optimal time and temperature.

Specific examples of the catalyst include inorganic acids such as hydrochloric acid, sulfuric acid, nitric acid, phosphoric acid, nitrous acid, perchloric acid, and sulfamic acid; and organic acids such as formic acid, acetic acid, propionic acid, butyric acid, oxalic acid, succinic acid, maleic acid, lactic acid, p-toluenesulfonic acid, and acrylic acid. In particular, the catalyst is preferably hydrochloric acid, acetic acid or acrylic acid because they facilitate control of the hydrolysis reaction and the condensation reaction.

The weight average molecular weight of the inorganic polymer is preferably in the range of 1, 000 to 100, 000. The lower limit of the weight average molecular weight of the inorganic polymer is more preferably 1, 500, and the upper limit thereof is more preferably 20, 000 and is further more preferably 10,000. When the weight average molecular weight is not less than the preferable lower limit, cured products obtained by curing the active energy ray-curable composition do not become too soft. Thus, the abrasion resistance can be further enhanced. When the weight average molecular weight is not more than the preferable upper limit, excessively high viscosity of an inorganic polymer-containing solution can be avoided. Thus, the handleability of the inorganic polymer-containing solution can be enhanced.

Here, the weight average molecular weight is a polystyrene equivalent weight average molecular weight determined by gel permeation chromatography (GPC). Specifically, the weight average molecular weight can be determined by preparing a 100-fold dilution of the inorganic polymer diluted with tetrahydrofuran (THF); filtering the dilution through a filter; and subjecting the filtrate to GPC using a column. Examples of the column include 2690 Separations Model (trade name, available from Water).

The amount of the inorganic polymer is preferably in the range of 5 to 89.9% by weight to 100% by weight of the total of the inorganic polymer, the water-soluble polyfunctional (meth)acrylate and the active energy ray polymerization initiator. The upper limit of the amount of the inorganic polymer is more preferably 79.9% by weight, and the lower limit thereof is more preferably 10% by weight and is further more preferably 20% by weight.

### (Water-soluble polyfunctional (meth)acrylate)

The water-soluble polyfunctional (meth)acrylate contained in the active energy ray-curable composition of the present invention is not particularly limited, provided that it is water-soluble and has two or more (meth) acrylic groups. Only one water-soluble polyfunctional (meth)acrylate may be used alone, or two or more water-soluble polyfunctional (meth)acrylates may be used in combination.

The term "(meth)acryl" used herein means acrylic or methacrylic. The term "(meth)acrylate" means acrylate or methacrylate.

Specific examples of the water-soluble polyfunctional (meth)acrylate include triethylene glycol di(meth)acrylate and pentaerythritol tri(meth)acrylate.

Examples of the water-soluble polyfunctional (meth)acrylate include oxyalkylene-modified glycerin (meth)acrylates represented by the following formula (3) and alkylene glycol di (meth) acrylates represented by the following formula (4). The water-soluble polyfunctional (meth) acrylate is preferably an oxyalkylene-modified glycerin (meth) acrylate represented by the formula (3) or an alkylene glycol di(meth)acrylate represented by the formula (4). The use of these preferable water-soluble polyfunctional (meth) acrylates further enhances the abrasion resistance of cured products of the active energy ray-curable composition.

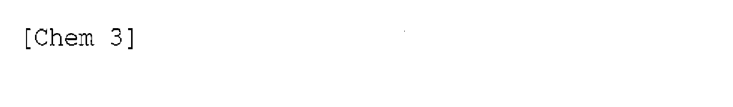

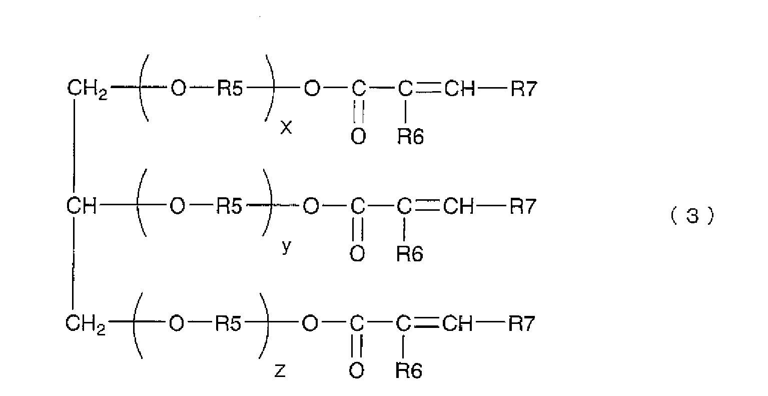

In the formula (3), R5 represents an ethylene group or a propylene group; R6 represents a hydrogen or a methyl group; R7 represents a hydrogen or a methyl group; and the sum of x, y and z is an integer of 6 to 30. The R5s, the R6s and the R7s may be same as or different from one another.

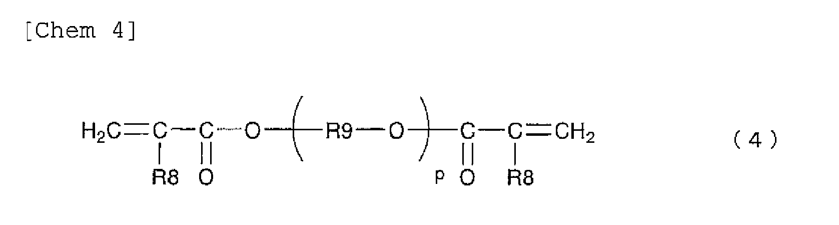

In the formula (4), R8 represents a hydrogen or a methyl group; R9 represents an ethylene group or a propylene group; and p is an integer of 1 to 25.

The water-soluble polyfunctional (meth)acrylate preferably contains at least three alkylene glycol units, more preferably contains at least six alkylene glycol units, and further more preferably contains at least nine alkylene glycol units. A larger number of alkylene glycol units leads to higher abrasion resistance of cured products.

When the relative amount of the water-soluble polyfunctional (meth)acrylate to the amount of the inorganic polymer is larger, the abrasion resistance of cured products tends to be higher. The weight ratio between the inorganic polymer and the water-soluble polyfunctional (meth)acrylate (inorganic polymer:water-soluble polyfunctional (meth)acrylate) is preferably 8:2 to 5:5. When the inorganic polymer and the water-soluble polyfunctional (meth)acrylate are used at a weight ratio within the above preferable range, cured products having further enhanced abrasion resistance can be provided.

The water-soluble polyfunctional (meth)acrylate may be added after polymerizing the inorganic polymer components through the hydrolysis and condensation reactions by a sol-gel method and removing the solvent, water and the like. Alternatively, the water-soluble polyfunctional (meth) acrylate may be added immediately after polymerizing the inorganic polymer components and thereafter the solvent, water and the like may be removed.

### (Active energy ray polymerization initiator)

The active energy ray polymerization initiator contained in the active energy ray-curable composition of the present invention is not particularly limited and is preferably a photopolymerization initiator that produces radicals in response to active energy ray radiation. Examples of the photopolymerization initiator include common commercial photopolymerization initiators.

Examples of the photopolymerization initiator include benzoin compounds, acetophenone compounds, anthraquinone compounds, thioxanthone compounds, ketal compounds, benzophenone compounds, and phosphine oxide compounds. Any of these photopolymerization initiators may be used alone, or two or more of these may be used in combination.

Examples of the benzoin compounds include benzoin, benzoin methyl ether, benzoin ethyl ether, benzoin propyl ether, and benzoin isobutyl ether.

Examples of the acetophenone compounds include acetophenone, 2,2-diethoxy-2-phenylacetophenone, 2,2-dimethoxy-1,2-diphenylethane-1-one, 1,1-dichloroacetophenone, 2-hydroxy-2-methyl-phenylpropane-1-one, diethoxyacetophenone, 1-hydroxycyclohexyl phenyl ketone, and 2-methyl-1-[4-(methylthio)phenyl]-2-morpholinopropane-1-one

Examples of the anthraquinone compounds include 2-ethylanthraquinone, 2-t-butylanthraquinone, 2-chloroanthraquinone, and 2-amylanthraquinone.

Examples of the thioxanthone compounds include 2,4-diethylthioxanthone, 2-isopropylthioxanthone, and 2-chlorothioxanthone.

Examples of the ketal compounds include acetophenone dimethyl ketal and benzyl dimethyl ketal.

Examples of the benzophenone compounds include benzophenone, 4-benzoyl-4'-methyldiphenylsulfide, and 4,4'-bismethylaminobenzophenone.

Examples of the phosphine oxides include 2,4,6-trimethylbenzoyldiphenylphosphine oxide, bis-(2,6-dimethoxybenzoyl)-2,4,4-trimethylpentylphosphine oxide, and bis(2,4,6-trimethylbenzoyl)-phenylphosphine oxide.

The photopolymerization initiator is preferably an acetophenone compound or a phosphine oxide compound because they can prevent yellowing after ultraviolet radiation. 2,2-Dimethoxy-1,2-diphenylethane-1-one, 1-hydroxycyclohexyl phenyl ketone, 2-methyl-1-[4-(methylthio)phenyl]-2-morpholinopropane-1-one, 2,4,6-trimethylbenzoyldiphenylphosphine oxide, and bis-(2,6-dimethoxybenzoyl)-2,4,4-trimethylpentylphosphine oxide are preferable and 2,2-dimethoxy-1,2-diphenylethane-1-one and 1-hydroxycyclohexyl phenyl ketone are more preferable because they can further prevent yellowing after active energy ray radiation.

The amount of the active energy ray polymerization initiator can be appropriately determined depending on the type and the number of moles of polymerizable double bonds of the components in the active energy ray-curable composition, and UV radiation energy. The amount of the active energy ray polymerization initiator is preferably in the range of 0.5 to 20% by weight to 100% by weight of the total of the inorganic polymer, the water-soluble polyfunctional (meth)acrylate and the active energy ray polymerization initiator. The lower limit of the amount of the active energy ray polymerization initiator is preferably 2% by weight, and the upper limit thereof is preferably 10% by weight. When the amount of the active energy ray polymerization initiator is too little, the polymerization reaction may not sufficiently proceed. As a result, the abrasion resistance of cured products tends to be low. When the amount of the active energy ray polymerization initiator is too much, cured products may develop cracks or cause exudation of decomposed substances to the surface during ultraviolet radiation or due to exposure to ultraviolet light in use. Thus, the external appearance of the cured product becomes poor.

### (Other components)

The active energy ray-curable composition of the present invention may be diluted with a solvent so as to be uniformly applied to a substrate.

Examples of the solvent include organic solvents. Any of the solvents may be used alone, or two or more of them may be used in combination. Specific examples of the organic solvents include alcohols such as ethanol, 1-propanol, 2-propanol, 1-butanol, t-butanol, and 1-methoxy-2-ethanol; esters such as ethyl acetate, propyl acetate, and butyl acetate; ketones such as methyl ethyl ketone, ethyl butyl ketone, methyl isobutyl ketone, and cyclohexanone; aromatic hydrocarbons such as toluene and xylene; and petroleum solvents such as petroleum ether and petroleum naphtha.

The active energy ray-curable composition of the present invention may optionally contain a thixotropy imparting agent, a dispersant, a fire retardant, a colorant, an ultraviolet absorbent, an antioxidant, or the like.

### (Active energy ray)

Examples of an active energy ray emitted to cure the active energy ray-curable composition of the present invention include ultraviolet rays, electron beams, α-rays, β-rays, γ-rays, X-rays, infrared rays, and visible light rays. Among these active energy rays, ultraviolet rays and electron beams are preferable because they provide excellent curability and resulting cured products are less likely to degrade.

To cure the active energy ray-curable composition of the present invention by ultraviolet radiation, various ultraviolet radiation devices can be used. Examples of usable light sources include xenon lamps, high-pressure mercury lamps, and metal halide lamps. The ultraviolet radiation energy is preferably in the range of 10 to 10,000 mJ/cm² and is more preferably in the range of 100 to 5,000 mJ/cm². When the ultraviolet radiation energy is too low, the active energy ray-curable composition is less likely to be cured, and the abrasion resistance of resulting cured products may be low. When the ultraviolet radiation energy is too high, cured products may be degraded or may be less transparent.

To cure the active energy ray-curable composition of the present invention by electron beam radiation, various electron beam radiation devices can be used. The electron beam radiation energy is preferably in the range of 0.5 to 20 Mrad and is more preferably in the range of 1.0 to 10 Mrad. When the electron beam radiation energy is too low, the active energy ray-curable composition is less likely to be cured, and the abrasion resistance of resulting cured products may be low. When the electron beam radiation energy is too high, cured products may be degraded or may be less transparent.

The active energy ray-curable composition of the present invention can be prepared by mixing the inorganic polymer, the water-soluble polyfunctional (meth)acrylate, the active energy ray polymerization initiator, and optionally other components.

The active energy ray-curable composition of the present invention can be made into a cured product by curing the composition by active energy ray radiation and then firing the composition. In the case that the inorganic polymer components include the compound represented by the formula (1) and the compound represented by the formula (2), the active energy ray-curable composition of the present invention can be made into a cured product by irradiating the composition with an active energy ray to proceed curing involving the polymerizable functional group, and firing the composition.

When the inorganic polymer components include the compound represented by the formula (1) and the compound represented by the formula (2), the active energy ray polymerization initiator is decomposed by irradiation of the active energy ray-curable composition of the present invention with an active energy ray, and produces radicals, which results in a first polymerization reaction between the water-soluble polyfunctional (meth)acrylate and the polymerizable double bond of the silane compound represented by the formula (1), which is one of the inorganic polymer components. At this time, a crosslinking reaction also proceeds.

By firing the active energy ray-curable composition after proceeding of the first polymerization reaction, a second polymerization reaction is allowed to proceed in which the inorganic polymer is cross-linked by siloxane bonds formed through a dehydration condensation reaction.

The firing temperature at which the second polymerization reaction proceeds is not particularly limited and is preferably set to as high a temperature as possible depending on the heat resistance of a substrate resin. For example, when the substrate is a polycarbonate resin, the firing temperature is about 110°C to 130°C. The reaction time can be appropriately changed depending on the firing temperature. The reaction time is about 30 minutes to 4 hours.

When the inorganic polymer components include the compound represented by the formula (1) and the compound represented by the formula (2), hard and compact cured products can be provided because the active energy ray-curable composition of the present invention is cured through the above first and second polymerization reactions. Thus, the abrasion resistance of the cured products can be further enhanced.

### (Active energy ray-curable coating material)

The active energy ray-curable composition of the present invention is preferably used as a coating material. The active energy ray-curable composition of the present invention is suitably used as an active energy ray-curable coating material.

### (Molded product)

The molded product of the present invention has a surface layer formed from the active energy ray-curable coating material prepared according to the present invention.

Fig. 1 is a perspective view illustrating a molded product according to one embodiment of the present invention. The molded product 1 illustrated in Fig. 1 includes a resin-molded body 2, and first and second surface layers 3 and 4 formed on both faces of the resin-molded body 2. The first and second surface layers 3 and 4 are formed by cured layers obtained by curing the active energy ray-curable coating material of the present invention.

Hereinafter, the present invention is specifically described by way of Examples and Comparative Examples. The present invention is not limited only to Examples.

### (Example 1)

Ethanol (95.2 g), 3-methacryloxy propyl trimethoxysilane (MPTS) (99.4 g (0.4 mol)), and methyltrimethoxysilane (MeTS) (109.0 g (0.8 mol)) were added to a flask and mixed into a mixed solution. Dilute hydrochloric acid prepared by diluting 12 N concentrated hydrochloric acid (8.75 g) with water (30.4 g) was dropwise added to the obtained mixed solution while the mixed solution was cooled to 0°C. The resulting mixture was stirred for 10 minutes and was stirred for another 10 minutes at room temperature. Thus, a mixed solution was prepared. The obtained mixed solution was heated to 80°C and concentrated by an evaporator into a viscous and transparent inorganic polymer-containing solution (125.0 g).

An active energy ray-curable composition was prepared by adding, to the obtained inorganic polymer-containing solution, isopropyl alcohol (125.0 g), ethoxylated glyceryl triacrylate (125.0 g, NK ester A-GLY-9E, x+y+z=9, Shin-Nakamura Chemical Co., Ltd.), which corresponds to the water-soluble polyfunctional (meth)acrylate represented by the formula (3), and 2,2-dimethoxy-1,2-diphenylethane-1-one (12.5 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth)acrylate, and was 4.8% by weight to 100% by weight of the total of the inorganic polymer, the water-soluble polyfunctional (meth)acrylate and the photopolymerization initiator.

### (Example 2)

A viscous and transparent inorganic polymer-containing solution (111.5 g) was prepared in a manner similar to Example 1, except that the amount of 3-methacryloxypropyltrimethoxysilane (MPTS) was changed from 99.4 g (0.4 mol) to 49.7 g (0.2 mol), and that the amount of methyltrimethoxysilane (MeTS) was changed from 109.0 g (0.8 mol) to 136.2 g (1.0 mol).

An active energy ray-curable composition was prepared by adding, to the obtained inorganic polymer-containing solution, isopropyl alcohol (111.5 g), ethoxylated glyceryl triacrylate (111.5 g, NK ester A-GLY-9E, Shin-Nakamura Chemical Co., Ltd.) as a water-soluble polyfunctional (meth)acrylate, and 2,2-dimethoxy-1,2-diphenylethane-1-one (11.2 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth) acrylate, and was 4.8% by weight to 100% by weight of the total of the inorganic polymer, the water-soluble polyfunctional (meth)acrylate and the photopolymerization initiator.

### (Example 3)

A viscous and transparent inorganic polymer-containing solution (165.4 g) was prepared in a manner similar to Example 1, except that the amount of 3-methacryloxypropyltrimethoxysilane (MPTS) was changed from 99.4 g (0.4 mol) to 248.4 g (1.0 mol), and that the amount of methyltrimethoxysilane (MeTS) was changed from 109.0 g (0.8 mol) to 27.2 g (0.2 mol).

An active energy ray-curable composition was prepared by adding, to the obtained inorganic polymer-containing solution, isopropyl alcohol (165.4 g), ethoxylated glyceryl triacrylate (165.4 g, NK ester A-GLY-9E, Shin-Nakamura Chemical Co., Ltd.) as a water-soluble polyfunctional (meth)acrylate, and 2,2-dimethoxy-1,2-diphenylethane-1-one (16.5 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth)acrylate, and was 4.8% by weight to 100% by weight of the total of the inorganic polymer, the water-soluble polyfunctional (meth)acrylate and the photopolymerization initiator.

### (Example 4)

Ethanol (95.2 g), tetraethoxysilane (TEOS) (20.8 g (0.1 mol)), 3-methacryloxypropyltrimethoxysilane (MPTS) (74.5 g (0.3 mol)), and methyltrimethoxysilane (MeTS) (109.0 g (0.8 mol)) were added to a flask and mixed into a mixed solution. Dilute hydrochloric acid prepared by diluting 12 N concentrated hydrochloric acid (8.75 g) with water (30.4 g) was dropwise added to the obtained mixed solution while the mixed solution was cooled to 0°C. The resulting mixture was stirred for 10 minutes and was stirred for another 10 minutes at room temperature. Thus, a mixed solution was prepared. The obtained mixed solution was heated to 80°C and concentrated by an evaporator into a viscous and transparent inorganic polymer-containing solution (122.6 g).

An active energy ray-curable composition was prepared by adding, to the obtained inorganic polymer-containing solution, isopropyl alcohol (122.6 g), ethoxylated glyceryl triacrylate (122.6 g, NK ester A-CLY-9E, Shin-Nakamura Chemical Co., Ltd.) as a water-soluble polyfunctional (meth)acrylate, and 2,2-dimethoxy-1,2-diphenylethane-1-one (12.3 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth)acrylate, and was 4.8% by weight to 100% by weight of the total of the inorganic polymer, the water-soluble polyfunctional (meth)acrylate and the photopolymerization initiator.

### (Example 5)

Ethanol (190.4 g), titanium tetraisopropoxide (TiTPr) (28.4 g (0.1 mol)), 3-methacryloxypropyltrimethoxysilane (MPTS) (74.5 g (0.3 mol)), and methyltrimethoxysilane (MeTS) (109.0 g (0.8 mol)) were added to a flask and mixed into a mixed solution. Dilute hydrochloric acid prepared by diluting 12 N concentrated hydrochloric acid (8.75 g) with water (21.4 g) was dropwise added to the obtained mixed solution while the mixed solution was cooled to 0°C. The resulting mixture was stirred for 10 minutes and was stirred for another 10 minutes at room temperature. Thus, a mixed solution was prepared. The obtained mixed solution was heated to 80°C and concentrated by an evaporator into a viscous and transparent inorganic polymer-containing solution (127.1 g).

An active energy ray-curable composition was prepared by adding, to the obtained inorganic polymer-containing solution, isopropyl alcohol (127.1 g), ethoxylated glyceryl triacrylate (127.1 g, NK ester A-GLY-9E, Shin-Nakamura Chemical Co., Ltd.) as a water-soluble polyfunctional (meth)acrylate, and 2,2-dimethoxy-1,2-diphenylethane-1-one (12.7 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth)acrylate, and was 4.8% by weight to 100% by weight of the total of the inorganic polymer, the water-soluble polyfunctional (meth)acrylate and the photopolymerization initiator.

### (Example 6)

An active energy ray-curable composition was prepared in a manner similar to Example 1, except that triethylene glycol dimethacrylate (125.0 g, NK ester 3G (p=3), Shin-Nakamura Chemical Co., Ltd.) was used as a water-soluble polyfunctional (meth)acrylate corresponding to the water-soluble polyfunctional (meth)acrylate represented by the formula (4) instead of ethoxylated glyceryl triacrylate (125.0 g, NK ester A-GLY-9E, Shin-Nakamura Chemical Co., Ltd.).

### (Comparative Example 1)

An active energy ray-curable composition was prepared in a manner similar to Example 1, except that trimethylolpropane triacrylate (125.0 g, NK ester A-TMPT, Shin-Nakamura Chemical Co., Ltd.) was used as a water-insoluble polyfunctional (meth)acrylate instead of ethoxylated glyceryl triacrylate (125.0 g, NK ester A-GLY-9E, Shin-Nakamura Chemical Co. , Ltd.). Since the active energy ray-curable composition prepared in Comparative Example 1 underwent phase separation, the composition was not evaluated.

### (Comparative Example 2)

An inorganic polymer-containing solution (125.0 g) was prepared in a manner similar to Example 1. An active energy ray-curable composition was prepared adding, to the obtained inorganic polymer-containing solution, isopropyl alcohol (125.0 g) and 2,2-dimethoxy-1,2-diphenylethane-1-one (6.3 g, Irgacure 651, Ciba Specialty Chemicals) as a photopolymerization initiator without adding any water-soluble polyfunctional (meth)acrylate. The amount of the photopolymerization initiator was 5 parts by weight per 100 parts by weight of the total of the inorganic polymer and the water-soluble polyfunctional (meth) acrylate, and was 4.8% by weight to 100% by weight of the total of the inorganic polymer, the water-soluble polyfunctional (meth)acrylate and the photopolymerization initiator.

### (Evaluation of Examples 1 to 6 and Comparative Examples 1 and 2)

A commercial transparent and colorless polycarbonate board (10 cm in length × 10 cm in width × 4 mm in thickness) was prepared. Each of the obtained active energy ray-curable compositions was uniformly applied to this polycarbonate board with a spin coater. The coat was dried for 10 minute at room temperature and then was irradiated with ultraviolet light in a nitrogen atmosphere by a 120-W high-pressure mercury lamp at a radiation energy of 1,500 mJ/cm². Subsequently, the coat was fired by heating in an oven at 125°C for 1 hour. Thus, a 5 µm-thick hard coat layer was formed on the upper face of the polycarbonate board.

### (1) External appearance

The condition of the hard coat layer after the firing was visually observed and evaluated based on the following evaluation criteria.

O: The hard coat layer was colorless and uniform.
Δ: The hard coat layer had some uneven portions, and a fluoroscopic image was distorted or the coat was cloudy.
×: The hard coat had cracks.

### (2) Evaluation of transparency

The haze value of the polycarbonate board with the hard coat layer formed thereon was measured with a haze meter (TC-HIIIDPK, Tokyo Denshoku Co., Ltd.) in accordance with JIS K7136. A smaller haze value corresponds to higher transparency.

Measurement of the haze value of the polycarbonate board without the hard coat layer formed thereon resulted in 0.2%.

### (3) Evaluation of abrasion resistance

Abrasion resistance was evaluated in accordance with JIS R3212 using a taber abrasion tester "rotary abrasion tester TS" (Toyo Seiki Seisaku-sho, LTD.) provided with a horizontal rotating table that rotates at a speed of 70 revolutions/min and a pair of abrasion wheels that are fixed at an interval of 65±3 mm and smoothly rotate. The abrasion wheels were CS-10F (Type IV). The haze difference (Δhaze %) between the haze after 500 cycles of a test under a load of 500 g and the initial haze was determined.

Measurement of the haze difference (Δhaze %) of the polycarbonate board without the hard coating layer formed thereon resulted in 48%. The hard coat layer formed from the active energy ray-curable composition of Comparative Example 2 had cracks and therefore was not evaluated for the abrasion resistance.

### (4) Adhesiveness

On the hard coat layer formed on the surface of the polycarbonate board, 11 lengthwise cut lines and 11 widthwise cut lines were formed with a razor edge at intervals of 1 mm in accordance with JIS K5400 such that separated 100 grids in total were formed. A commercial cellophane adhesive tape was stuck to the hard coat layer with the grids and then the cellophane adhesive tape was rapidly removed from the hard coat layer in the 90° direction. Among the 100 grids in total, the number of grids in which the hard coat layer was not peeled off from the polycarbonate board and remained was counted.

Table 1 shows the results.

**[Table 1]**

| | | | Ex. 1 | Ex. 2 | Ex. 3 | Ex. 4 | Ex. 5 | Ex. 6 | Comp. Ex.1 | Comp. Ex. 2 |
|---|---|---|---|---|---|---|---|---|---|---|
| Inorganic Polymer Components | TEOS | g | | | | 20.8 | | | | |
| | MPTS | g | 99.4 | 49.7 | 248.4 | 74.5 | 74.5 | 99.4 | 99.4 | 99.4 |
| | MeTS | g | 109.0 | 136.2 | 27.2 | 109.0 | 109.0 | 109.0 | 109.0 | 109.0 |
| | TiTPr | g | | | | | 28.4 | | | |
| Water-soluble Polyfunctional (meth)acrylate | Ethoxylated Glyceryl Triacrylate | g | 125.0 | 111.5 | 165.4 | 122.6 | 127.1 | | | |
| | Triethylene Glycol Dimethacrylate | | | | | | | 125.0 | | |
| Water-insoluble Polyfunctional (meth)acrylate | Trimethylolpropane Triacrylate Trimethylolpropane Triacrylate | g | | | | | | | 125.0 | |
| Photopolymerization Initiator | 2,2-Dimethoxy-1,2-diphenylethane-1-one | g | 12.5 | 11.2 | 16.5 | 12.3 | 12.7 | 12.5 | 12.5 | 6.3 |
| Evaluation | Weight Average Molecular Weight (Mw) of Inorganic Polymer | | 5500 | 6400 | 3500 | 6700 | 7000 | 5500 | 5500 | 5500 |
| | External Appearance | | ○ | ○ | ○ | ○ | ○ | ○ | Composition Underwent phase Separation | × |
| | Transparency (haze value) | (%) | 0.1 | 0.1 | 0.2 | 0.2 | 0.1 | 0.1 | - | 28.6 |
| | Abrasion Resistance (Δhaze %) | | 8.0 | 9.4 | 11.2 | 10.5 | 12.0 | 12.5 | - | - |
| | Adhesiveness | | 100 | 100 | 100 | 100 | 100 | 100 | - | ○ |

In order to prepare the active energy ray-curable compositions of Examples 7 to 31 and Comparative Examples 3 to 5, the following materials were prepared.

1) Tetraethoxy silane (TEOS)
2) 3-Methacryloxypropyltrimethoxysilane (MPTS)
3) Methyltrimethoxysilane (MeTS)
4) Ethoxylated glyceryl triacrylate corresponding to the water-soluble polyfunctional (meth)acrylate represented by the formula (3) (NK ester A-GLY-9E (x+y+z=9), Shin-Nakamura Chemical Co., Ltd.)
5) Polyethylene glycol diacrylate corresponding to the water-soluble polyfunctional (meth)acrylate represented by the formula (4) (NK ester A-400 (p= 9), Shin-Nakamura Chemical Co., Ltd.)
6) 2,2-Dimethoxy-1,2-diphenylethane-1-one (photopolymerization initiator, Irgacure 651, Ciba Specialty Chemicals)

### (Example 7)

Ethanol (95.2 g), 3-methacryloxypropyltrimethoxysilane (MPTS) (99.4 g (0.4 mol)), and methyltrimethoxysilane (MeTS) (109. 0 g (0.8 mol)) were added to a flask and mixed into a mixed solution. Dilute hydrochloric acid prepared by diluting 12 N concentrated hydrochloric acid (8.75 g) with water (30.4 g) was dropwise added to the obtained mixed solution while the mixed solution was cooled to 0°C. The resulting mixture was stirred for 10 minutes and was stirred for another 10 minutes at room temperature. Thus, a mixed solution was prepared. The obtained mixed solution was heated to 80°C and concentrated by an evaporator into a viscous and transparent inorganic polymer-containing solution (125.0 g).

An active energy ray-curable composition was prepared by adding, to the obtained inorganic polymer-containing solution, isopropyl alcohol (625.0 g), ethoxylated glyceryl triacrylate (500.0 g, NK ester A-GLY-9E, x+y+z=9, Shin-Nakamura Chemical Co., Ltd.) which corresponds to the water-soluble polyfunctional (meth)acrylate represented by the formula (3), and 2,2-dimethoxy-1,2-diphenylethane-1-one (31.3 g, Irgacure 651, Ciba Specialty Chemicals) as a photopolymerization initiator. The amount of the photopolymerization initiator was 4.8% by weight to 100% by weight of the total of the inorganic polymer, the water-soluble polyfunctional (meth)acrylate and the photopolymerization initiator.

### (Examples 8 to 30 and Comparative Examples 3 to 5)

An active energy ray-curable composition was prepared in a manner similar to Example 1, except that the used materials and the amounts thereof were changed as shown in Tables 2 to 4.

### (Example 31)

Ethanol (66.24 g) and 3-methacryloxypropyltrimethoxysilane (MPTS) (178.85 g (0.72 mol)) were added to a flask and mixed into a mixed solution. Dilute hydrochloric acid prepared by diluting 12 N concentrated hydrochloric acid (6.00 g) with water (22.60 g) was dropwise added to the obtained mixed solution while the mixed solution was cooled to 0°C. The resulting mixture was stirred for 10 minutes and was stirred for another 10 minutes at room temperature. Thus, a mixed solution was prepared. The obtained mixed solution was heated to 80°C and concentrated by an evaporator into a viscous and transparent inorganic polymer-containing solution (125.0 g). The weight average molecular weight of the obtained inorganic polymer-containing solution was 2,500.

An active energy ray-curable composition was prepared by adding, to the obtained inorganic polymer-containing solution, isopropyl alcohol (625.0 g), ethoxylated glyceryl triacrylate (500.0 g, NK ester A-GLY-9E, x+y+z=9, Shin-Nakamura Chemical Co., Ltd.), which corresponds to the water-soluble polyfunctional (meth)acrylate represented by the formula (3), and 2,2-dimethoxy-1,2-diphenylethane-1-one (31.3 g, Irgacure 651, Ciba Specialty Chemicals) as a photopolymerization initiator. The amount of the photopolymerization initiator was 5 parts by weight per 100 parts by weight of the total of the inorganic polymer and the water-soluble polyfunctional (meth)acrylate, and was 4.8% by weight to 100% by weight of the total of the inorganic polymer, the water-soluble polyfunctional (meth)acrylate and the photopolymerization initiator.

### (Evaluation of Examples 7 to 31 and Comparative Examples 3 to 5)

The compositions were evaluated for the same evaluation traits as those evaluated for the compositions of Examples 1 to 7 and Comparative Examples 1 and 2.

Tables 2 to 4 show the results.

**[Table 2]**

| | | | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|
| Inorganic Polymer Components | TEOS | g | | | | | | | | | | |
| | MPTS | g | 99.4 | 99.4 | 99.4 | 99.4 | 99.4 | 99.4 | 49.7 | 49.7 | 49.7 | 49.7 |
| | MeTS | g | 109.0 | 109.0 | 109.0 | 109.0 | 109.0 | 109.0 | 136.2 | 136.2 | 136.2 | 136.2 |
| Yield of Inorganic Polymer | | g | 125.0 | 125.0 | 125.0 | 125.0 | 1 25.0 | 125.0 | 111.5 | 111.5 | 111.5 | 111.5 |
| Water-soluble Polyfunctional (meth)acrylate | Ethoxylated Glyceryl Triacrylate | g | 500.0 | 250.0 | 125.0 | | | | 446.0 | 223.0 | 111.5 | |
| | Polyethylene Glycol Diacrylate | g | | | | 500.0 | 250.0 | 125.0 | | | | 446.0 |
| Solvent | Isopropyl Alcohol | g | 625.0 | 375.0 | 250.0 | 625.0 | 375.0 | 250.0 | 557.5 | 334.5 | 223.0 | 557.5 |
| Photopolymerization Initiator | 2,2-Dimethoxy-1,2-diphenylethane-1-one | g 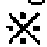 1 | 31.3 | 18.7 | 12.5 | 33.3 | 18.7 | 12.5 | 27.9 | 16.7 | 11.2 | 27.9 |
| Evaluation | Weight Average Molecular Weight (Mw) of Inorganic Polymer | | 5500 | 5500 | 5500 | 5500 | 5500 | 5500 | 6400 | 6400 | 6400 | 6400 |
| | External Appearance | | ○ | ○ | ○ | ○ | ○ | ○ | ○ | ○ | ○ | ○ |
| | Transparency (haze value) | (%) | 0.1 | 0.1 | 0.1 | 0.1 | 0.1 | 0.1 | 0.1 | 0.1 | 0.1 | 0.1 |
| | Abrasion Resistance (Δhaze %) | | 5.5 | 6.2 | 7.5 | 7.4 | 8.3 | 9.5 | 6.2 | 7.1 | 7.9 | 8.1 |
| | Adhesiveness grids/100 grids) (Number of remaining grids/100 grids) | | 100 | 100 | 100 | 100 | 100 | 100 | 100 | 100 | 100 | 100 |

| | | | | | | | | | | | | |
|---|---|---|---|---|---|---|---|---|---|---|---|---|
| 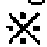 1 The photopolymerization initiator was added in an amount of 4.8% by weight to 100% by weight of the total of the inorganic polymer, the water-soluble polyfunctional (meth)acrylate and the photopolymerization initiator. | | | | | | | | | | | | |

**[Table 3]**

| | | | Ex. 17 | Ex. 18 | Ex. 19 | Ex. 20 | Ex. 21 | Ex. 22 | Ex. 23 | Ex. 24 | Ex. 25 | Ex. 26 |
|---|---|---|---|---|---|---|---|---|---|---|---|---|
| Inorganic Polymer Components | TEOS | g | | | | | | | | | 20.8 | 20.8 |
| | MPTS | g | 49.7 | 49.7 | 248.4 | 248.4 | 248.4 | 248.4 | 248.4 | 248.4 | 74.5 | 74.5 |
| | MeTS | g | 136.2 | 136.2 | 27.2 | 27.2 | 27.2 | 27.2 | 27.2 | 27.2 | 109.0 | 109.0 |
| Yield of Inorganic Polymer | | g | 111.5 | 111.5 | 165.4 | 165.4 | 165.4 | 1 65.4 | 165.4 | 165.4 | 122.6 | 122.6 |
| Water-soluble Polyfunctional (meth)acrylate | Ethoxylated Glyceryl Triacrylate | g | | | 661.3 | 330.8 | 165.4 | | | | 490.2 | 245.2 |
| | Polyethylene Glycol Diacrylate | g | 223.0 | 111.5 | | | | 661.4 | 330.8 | 165.4 | | |
| Solvent | Isopropyl Alcohol | g | 334.5 | 223.0 | 236.7 | 496.2 | 330.8 | 826.8 | 496.2 | 330.8 | 612.8 | 367.8 |
| Photopolymerization Initiator | 2,2-Dimethoxy-1,2-diphenylethane-1-one | g 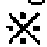 1 | 16.7 | 11.2 | 41.3 | 24.8 | 16.5 | 41.3 | 24.8 | 16.5 | 30.6 | 18.4 |
| Evaluation | Weight Average Molecular Weight (Mw) of Inorganic Polymer | | 6400 | 6400 | 3500 | 3500 | 3500 | 3500 | 3500 | 3500 | 6700 | 6700 |
| | External Appearance | | ○ | ○ | ○ | ○ | ○ | ○ | ○ | ○ | ○ | ○ |
| | Transparency (haze value) | (%) | 0.1 | 0.1 | 0.1 | 0.1 | 0.1 | 0.1 | 0.1 | 0.1 | 0.1 | 0.1 |
| | Abrasion Resistance (Δhaze %) | | 8.8 | 9.5 | 5.9 | 6.5 | 7.8 | 7.8 | 8.5 | 9.5 | 5.2 | 6.0 |
| | Adhesiveness (Number of remaining grids/100 grids) | | 100 | 100 | 100 | 100 | 100 | 100 | 100 | 100 | 100 | 100 |

| | | | | | | | | | | | | |
|---|---|---|---|---|---|---|---|---|---|---|---|---|
| 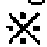 1 The photopolymerization initiator was added in an amount of 4.8% by weight to 100% by weight of the total of the inorganic polymer, the water-soluble polyfunctional (meth)acrylate and the photopolymerization initiator. | | | | | | | | | | | | |

**[Table 4]**

| | | | Ex. 27 | Ex. 28 | Ex. 29 | Ex. 30 | Ex. 31 | Comp. Ex. 3 | Comp. Ex. 4 | Comp. Ex. 5 |
|---|---|---|---|---|---|---|---|---|---|---|
| Inorganic Polymer Components | TEOS | g | 20.8 | 20.8 | 20.8 | 20.8 | | | | 20.8 |
| | MPTS | g | 74.5 | 74.5 | 74.5 | 74.5 | 178.9 | 49.7 | 248.4 | 74.5 |
| | MeTS | g | 109.0 | 109.0 | 109.0 | 109.0 | | 136.2 | 27.2 | 109.0 |
| Yield of Inorganic Polymer | | g | 122.6 | 122.6 | 122.6 | 122.6 | 125.0 | 111.5 | 165.4 | 122.6 |
| Water-soluble Polyfunctional (meth)acrylate | Ethoxylated Glyceryl Triacrylate | g | 122.6 | | | | 500.0 | | | |
| | Polyethylene Glycol Diacrylate | g | | 490.2 | 245.2 | 122.6 | | | | |
| Solvent | Isopropyl Alcohol | g | 245.2 | 61 2.8 | 367.8 | 245.2 | 625.0 | 111.5 | 165.4 | 122.6 |
| Photopolymerization Initiator | 2,2-Dimethoxy-1,2-diphenylethane-1-one | g 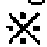 1 | 12.3 | 30.6 | 18.4 | 12.3 | 31.3 | 5.6 | 8.3 | 6.1 |
| Evaluation | Weight Average Molecular Weight (Mw) of Inorganic Polymer | | 6700 | 6700 | 6700 | 6700 | 2500 | 6500 | 3500 | 6700 |
| | External Appearance | | ○ | ○ | ○ | ○ | ○ | ○ | ○ | ○ |
| | Transparency (haze value) | (%) | 0.1 | 0.1 | 0.1 | 0.1 | 0.1 | 0.1 | 0.1 | 0.1 |
| | Abrasion Resistance (Δhaze %) | | 7.1 | 7.5 | 8.5 | 9.7 | 5.5 | 65.4 | 49.9 | 71.2 |
| | Adhesiveness grids/100 grids) (Number of remaining grids/100 grids) | | 100 | 100 | 100 | 100 | 100 | 100 | 100 | 100 |

| | | | | | | | | | | |
|---|---|---|---|---|---|---|---|---|---|---|
| 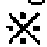 1 The photopolymerization initiator was added in an amount of 4.8% by weight to 100% by weight of the total of the inorganic polymer, the water-soluble polyfunctional (meth)acrylate and the photopolymerization initiator. | | | | | | | | | | |

### EXPLANATION OF SYMBOLS

- 1: Molded product
- 2: Resin-molded body
- 3, 4: First and second surface layers

## Claims

1. An active energy ray-curable composition comprising:
an inorganic polymer obtainable by hydrolytic condensation of inorganic polymer components including a silane compound;
a water-soluble polyfunctional (meth)acrylate; and
an active energy ray polymerization initiator,
the silane compound being represented by the formula (1):
Si(R1)ₚ(OR2)₄₋ₚ
wherein R1 represents a C₁₋₃₀ organic group containing a polymerizable double bond; R2 represents a C₁₋₆ alkyl group; p is 1 or 2; when p is 2, the R1s may be the same as or different from one another; and the R2s may be the same as or different from one another.

2. The active energy ray-curable composition according to claim 1,
wherein
the inorganic polymer components further include a metal alkoxide compound represented by the formula (2):
M(R3)ₙ(OR4)₄₋ₙ
wherein M represents Si, Ti, or Zr; R3 represents a phenyl group, a C₁₋₃₀ alkyl group, or a C₁₋₃₀ hydrocarbon group containing an epoxy group; R4 represents a C₁₋₆ alkyl group; n is an integer of 0 to 2; when n is 2, the R3s may be the same as or different from one another; and the R4s may be the same as or different from one another.

3. The active energy ray-curable composition according to claim 2,
wherein
the compound represented by the formula (2) is a silane compound represented by the formula (21):
Si(R13)ₘ(OR14)₄₋ₘ
wherein R13 represents a phenyl group, a C₁₋₃₀ alkyl group, or a C₁₋₃₀ hydrocarbon group containing an epoxy group; R14 represents a C₁₋₆ alkyl group; m is an integer of 0 to 2; when m is 2, the R13s may be the same as or different from one another; and the R14s may be the same as or different from one another.

4. The active energy ray-curable composition according to claim 2,
wherein
the inorganic polymer components include, as the compound represented by the formula (2), a compound represented by the formula (2A):
M(OR4a)₄
wherein R4as each represent a C₁₋₆ alkyl group and may be the same as or different from one another.

5. The active energy ray-curable composition according to claim 3,
wherein
the inorganic polymer components include, as the compound represented by the formula (21), a compound represented by the formula (21A):
Si(OR14a)₄
wherein R14as each represent a C₁₋₆ alkyl group and may be the same as or different from one another.

6. The active energy ray-curable composition according to claim 1 or 2,
wherein
the water-soluble polyfunctional (meth)acrylate is an oxyalkylene-modified glycerin (meth)acrylate represented by the formula (3): 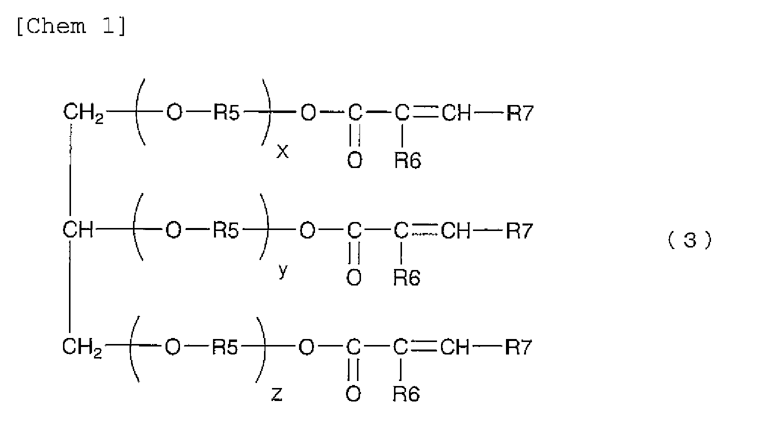 wherein R5 represents an ethylene group or a propylene group; R6 represents a hydrogen or a methyl group; R7 represents a hydrogen or a methyl group; the sum of x, y and z is an integer of 6 to 30; and the R5s, the R6s and the R7s may be same as or different from one another; or
an alkylene glycol di(meth)acrylate represented by the formula (4): 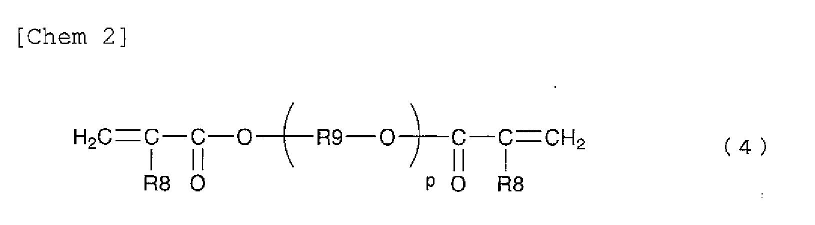 wherein R8 represents a hydrogen or a methyl group; R9 represents an ethylene group or a propylene group; and p is an integer of 1 to 25.

7. An active energy ray-curable coating material comprising an active energy ray-curable composition according to claim 1 or 2.

8. A molded product,
which has a surface layer formed from the active energy ray-curable coating material according to claim 7.
